# EUROPÄISCHE PATENTSCHRIFT

(11) **EP 1 194 926 B1**
(45) Veröffentlichungstag und Bekanntmachung des Hinweises auf die Patenterteilung: **26.11.2003**
(21) Anmeldenummer: 00936784.8
(22) Anmeldetag: 23.05.2000
(51) Int. Cl.: G11B 7/00, G11B 7/24

(54) **ZYLINDERFÖRMIGER OPTISCHER DATENSPEICHER**
CYLINDRICAL OPTICAL DATA MEMORY
MEMOIRE DE DONNEES OPTIQUE EN FORME DE ROULEAU

(30) Priorität: 12.07.1999 DE 19932900
(43) Veröffentlichungstag der Anmeldung: 10.04.2002
(73) Patentinhaber: Tesa AG, 20253 Hamburg (DE)
(72) Erfinder: LEIBER, Jörn, D-22529 Hamburg (DE); MÜSSIG, Bernhard, D-21218 Seevetal (DE); STADLER, Stefan, 22359 Hamburg (DE)
(74) Vertreter: UEXKÜLL & STOLBERG
(86) Internationale Anmeldenummer: EP0004675
(87) Internationale Veröffentlichungsnummer: WO01004881

(56) Entgegenhaltungen:
- EP-A- 0 352 194
- EP-A- 0 360 144
- EP-A- 0 514 589
- WO-A-00/17864
- US-A- 5 838 653
- PATENT ABSTRACTS OF JAPAN vol. 004, no. 127 (P-026), 6. September 1980 (1980-09-06) & JP 55 080832 A (OKI ELECTRIC IND CO LTD), 18. Juni 1980 (1980-06-18)

## Beschreibung

Die Erfindung betrifft einen Datenspeicher mit einem optischen Informationsträger, der eine spiralartig gewickelte Polymerfolie aufweist.

In der Gebrauchsmusterschrift DE-U-298 16 802 ist ein Datenspeicher mit einem in mehreren Lagen spiralartig auf einen Wickelkern gewickelten Informationsträger für optisch auslesbare Informationseinheiten beschrieben. Die Ansprüche wurden gegen dieses Dokument abgegrenzt. Der Informationsträger kann eine Polymerfolie aufweisen, wobei sich zwischen benachbarten Lagen jeweils eine Adhäsionsschicht befindet. In diesen Datenspeicher lassen sich Informationen einschreiben, indem die Polymerfolie mit Hilfe eines Schreibstrahls eines Datenlaufwerks lokal erwärmt wird, wodurch sich die Brechzahl und damit das Reflexionsvermögen (Reflektivität) an der Grenzfläche der Polymerfolie lokal ändern. Dies kann mit Hilfe eines Lesestrahls in dem Datenlaufwerk erfaßt werden. Durch Fokussieren des Schreibstrahls oder Lesestrahls läßt sich Information gezielt in eine vorgewählte Lage des Informationsträgers einschreiben bzw. daraus auslesen. Der Wickelkern kann optisch transparent sein und in seinem Zentralbereich eine Aussparung aufweisen, die zum Aufnehmen der Schreib- und Leseeinrichtung eines Datenlaufwerks dient. Dabei wird die Schreib- und Leseeinrichtung relativ zu dem Datenspeicher bewegt, während der Datenspeicher ruht, so daß der Datenspeicher nicht im Hinblick auf eine schnelle Rotationsbewegung ausgewuchtet zu sein braucht.

Bei dem vorbekannten Datenspeicher stört der Wickelkern, da seine optische Qualität unzureichend ist, solange er nicht mit großem Aufwand gefertigt wird. Da der Wickelkern bei Verwendung des Datenspeichers in einem Datenlaufwerk, dessen Schreib- und Leseeinrichtung in der Aussparung des Wickelkerns plaziert sind, bei jedem Lesevorgang mehrmals durchstrahlt werden muß, wirkt sich eine unzureichende optische Qualität besonders ungünstig aus.

EP-A-0 360 144 beschreibt einen Datenspeicher mit einem zylindrischen optischen Informationsträger, der einschichtig an der Außenseite einer Trommel angeordnet ist. Daten werden von der Außenseite der Trommel her geschrieben oder gelesen.

Es ist Aufgabe der Erfindung, den eingangs genannten vorbekannten Datenspeicher so zu verbessern, daß sich keine Probleme infolge einer unzureichenden optischen Qualität eines Wickelkerns ergeben, der Datenspeicher aber trotzdem kostengünstig gefertigt werden kann.

Diese Aufgabe wird gelöst durch einen Datenspeicher mit den Merkmalen des Anspruchs 1. Der Anspruch 7 gibt ein Verfahren zum Herstellen eines derartigen Datenspeichers an. Vorteilhafte Ausgestaltungen der Erfindung folgen aus den abhängigen Ansprüchen.

Der erfindungsgemäße Datenspeicher hat einen optischen Informationsträger, der eine spiralartig gewickelte Polymerfolie aufweist. Der Zentralbereich des Datenspeichers ist mit einer Aussparung versehen, deren periphere Begrenzung durch die innerste Wicklung der Polymerfolie gebildet ist. Der Datenspeicher enthält also keinen separaten Wickelkern, wie es bei dem vorbekannten Datenspeicher der Fall ist.

Das Lesen von Information oder Daten aus dem erfindungsgemäßen Datenspeicher und - falls der Datenspeicher zum Eingeben von Daten durch den Benutzer eingerichtet ist - das Einschreiben von Information in den Datenspeicher wird also nicht durch einen Wickelkern behindert. Daher ist der erfindungsgemäße Datenspeicher insbesondere zur Verwendung in einem Laufwerk geeignet, bei dem eine Leseeinrichtung und eine optionale Schreibeinrichtung in der Aussparung im Zentralbereich des Datenspeichers angeordnet sind.

Vorzugsweise ist die Polymerfolie in mehreren Polymerfolienlagen gewickelt, durch die hindurch Information aus einer vorgewählten Polymerfolienlage auslesbar und optional in eine vorgewählte Polymerfolienlage schreibbar ist. Dabei kann zwischen benachbarten Polymerfolienlagen jeweils eine Adhäsionsschicht angeordnet sein, um die Polymerfolienlagen untereinander zu fixieren. So können zum Beispiel 10 bis 30 Polymerfolienlagen übereinander gewickelt sei, aber auch mehr oder weniger. Bei einer Dicke der Polymerfolie zwischen 10 µm und 100 µm, vorzugsweise unter 50 µm oder um 35 µm, läßt sich die Information auf unterschiedlichen Polymerfolienlagen mit Hilfe von zum Beispiel aus der DVD-Technologie bekannten Lese- und Schreibeinrichtungen gut auflösbar voneinander trennen. Eine Adhäsionsschicht kann zum Beispiel eine Dicke im Bereich zwischen 1 µm und 40 µm haben, vorzugsweise unter 25 µm oder um 2 µm. Als Adhäsionsmittel eignet sich zum Beispiel ein luftblasenfreier Acrylatkleber, der z.B. chemisch oder durch UV- bzw. Elektronenstrahlung vernetzt wird. Mit einem derartigen mehrlagigen Aufbau des Datenspeichers läßt sich eine sehr hohe Speicherdichte erreichen. Ferner ergibt sich auch ohne Wickelkern eine ausreichende mechanische Stabilität, die beispielsweise noch erhöht werden kann, indem der Datenspeicher in eine äußere Hülse eingesetzt ist. Geringfügige Abweichungen der gewickelten Polymerfolie von einer idealen Spiralform, wie sie sich zum Beispiel aufgrund eines nicht vorhandenen Wickelkerns durch Deformation der Wicklungen der Polymerfolie ergeben könnten, wirken sich beim Lesen bzw. Schreiben von Daten nicht störend aus, da der Fokus eines Lesestrahls bzw. eines Schreibstrahls problemlos nachgeführt werden kann, um in einer vorgewählten Lage des Informationsträgers zu bleiben. Wenn die Leseeinrichtung und die optionale Schreibeinrichtung in der Aussparung im Zentralbereich des Datenspeichers angeordnet sind und zum Lesen bzw. Schreiben von Information relativ zu dem Datenspeicher bewegt werden, während der Datenspeicher ruht, spielt auch eine eventuelle Unwucht des Datenspeichers keine Rolle.

Vorzugsweise weicht die Brechzahl der Adhäsionsschicht nur geringfügig von der Brechzahl der Polymerfolie ab, um störende Reflexionen des Lesestrahls oder des Schreibstrahls an einer Grenzschicht zwischen einer Polymerfolienlage und einer benachbarten Adhäsionsschicht zu minimieren. Besonders vorteilhaft ist es, wenn der Unterschied der Brechzahlen kleiner als 0,005 ist. Ein bestehender Unterschied der Brechzahlen kann jedoch zum Formatieren des Datenspeichers genutzt werden.

Bei einer bevorzugten Ausführungsform des erfindungsgemäßen Datenspeichers ist die Brechzahl der Polymerfolie lokal durch Erwärmung veränderbar. Als Material für die Polymerfolie kommen zum Beispiel Polymethylmethacrylat (PMMA) oder biaxial orientiertes Polypropylen (BOPP) in Betracht. Wenn Polypropylen nach der Extrusion zur Folie in zwei Ebenen vorgespannt wird, wird im Material eine hohe Eigenenergie gespeichert. Bei einer lokalen Erwärmung, zum Beispiel durch einen Schreibstrahl, kommt es dann zu einer starken Materialänderung durch Rückverformung, und zwar bereits bei Deposition einer relativ geringen Energiemenge pro Flächeneinheit. Auf diese Weise läßt sich zum Beispiel eine Änderung der Brechzahl von etwa 0,2 über eine Fläche für eine gespeicherte Informationseinheit mit einem Durchmesser oder einer Seitenlänge von etwa 1 µm erzielen, was mit Hilfe eines Lesestrahls gut erfaßbar ist.

Der Polymerfolie kann ein Absorber zugeordnet sein, der dazu eingerichtet ist, einen Schreibstrahl zumindest teilweise zu absorbieren und die dabei erzeugte Wärme zumindest teilweise lokal an die Polymerfolie abzugeben. Der Absorber enthält zum Beispiel Farbstoffmoleküle, die in der Polymerfolie oder in einer zu der Polymerfolie benachbarten Adhäsionsschicht enthalten sind, und ermöglicht eine zur Veränderung der Brechzahl ausreichende lokale Erwärmung der Polymerfolie bei relativ geringer Intensität des Schreibstrahls.

Der erfindungsgemäße Datenspeicher kann hergestellt werden, indem die Polymerfolie spiralartig auf einen Wickelkörper gewickelt wird und der Wickelkörper anschließend aus dem Zentralbereich des Datenspeichers herausgezogen wird. Wenn zwischen benachbarten Polymerfolienlagen jeweils eine Adhäsionsschicht angeordnet werden soll, wird bei einer vorteilhaften Ausgestaltung des Verfahrens die Polymerfolie auf einer Seite mit einer Adhäsionsschicht versehen, die beim Wickeln der Polymerfolie auf den Wickelkörper nach außen weist. Die Adhäsionsschicht kann daher nicht mit dem Wickelkörper verkleben, so daß sich der Wickelkörper nach Abschluß des Wickelvorgangs problemlos aus dem Zentralbereich des Datenspeichers herausziehen läßt. Die nach außen weisende Adhäsionsschicht auf der äußersten Polymerfolienlage kann nach Abschluß des Wickelvorgangs mit einer zusätzlichen, nichtklebenden Materiallage überdeckt oder auch zum Beispiel mit Hilfe eines Lösungsmittels entfernt oder durch chemische oder physikalische Behandlung nichtklebend gemacht werden. Auf diese Weise läßt sich ein erfindungsgemäßer Datenspeicher kostengünstig herstellen.

Im folgenden wird die Erfindung anhand von Ausführungsbeispielen näher erläutert. Die Zeichnungen zeigen in
- Figur 1: einen erfindungsgemäßen Datenspeicher, der eine spiralartig gewickelte Polymerfolie aufweist, in schematischer perspektivischer Darstellung, wobei in einer Aussparung im Zentralbereich des Datenspeichers Teile eines auf den Datenspeicher abgestimmten Laufwerks angeordnet sind,
- Figur 2: eine schematische Seitenansicht eines Verfahrensschritts bei der Herstellung eines erfindungsgemäßen Datenspeichers,
- Figur 3: einen schematischen Querschnitt durch den Zentralbereich eines erfindungsgemäßen Datenspeichers und
- Figur 4: einen schematischen Querschnitt durch den Zentralbereich eines erfindungsgemäßen Datenspeichers bei einem Verfahrensschritt gemäß einer anderen Ausgestaltung des Herstellungsverfahrens.

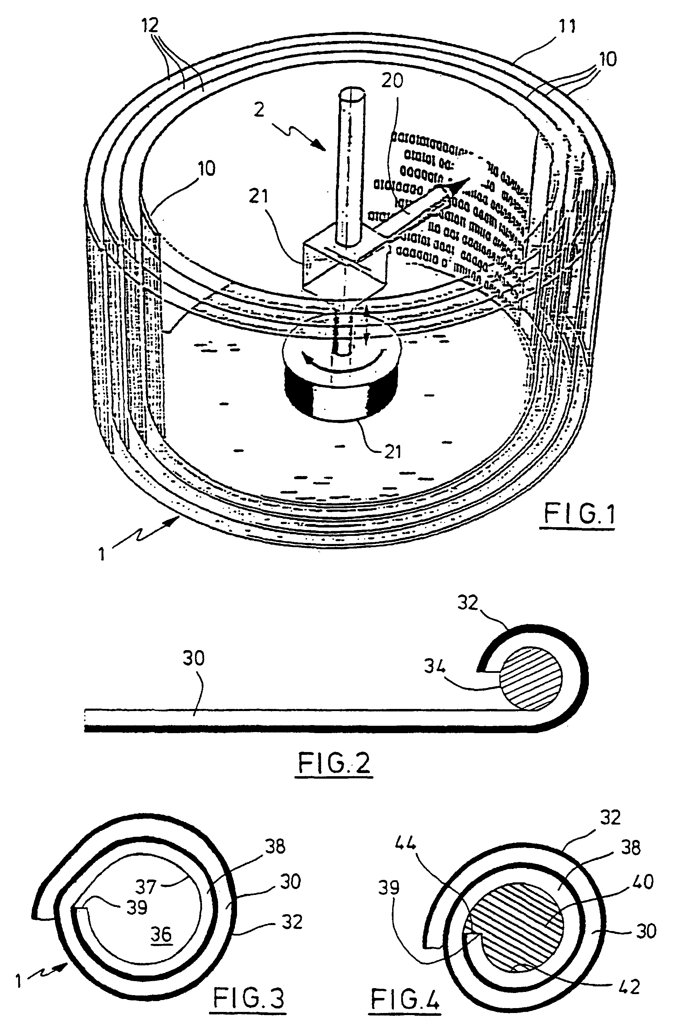

Figur 1 zeigt in schematischer Darstellung einen Datenspeicher 1 und eine Schreib- und Leseeinrichtung 2 eines auf den Datenspeicher 1 abgestimmten Laufwerks. Der Datenspeicher 1 weist eine Anzahl von Lagen 10 einer als Informationsträger dienenden Polymerfolie 11 auf, die spiralartig gewickelt ist. Wie der Zentralbereich des Datenspeichers 1 gestaltet ist, ist weiter unten anhand der Figur 3 näher beschrieben. Zur besseren Veranschaulichung sind die einzelnen Lagen 10 der Polymerfolie 11 in Figur 1 als konzentrische Kreisringe gezeigt, obwohl die Lagen 10 durch spiralartiges Wickeln der Polymerfolie 11 ausgebildet sind. Zwischen benachbarten Lagen 10 der Polymerfolie 11 ist jeweils eine Adhäsionsschicht 12 angeordnet. Aus Gründen der Übersichtlichkeit sind die Adhäsionsschichten 12 in Figur 1 in nicht maßstäblich vergrößerter Dicke eingezeichnet.

Die Polymerfolie 11 besteht im Ausführungsbeispiel aus biaxial orientiertem Polypropylen und wurde vor dem Wickeln in beiden Flächenrichtungen vorgespannt. Im Ausführungsbeispiel hat die Polymerfolie 11 eine Dicke von 35 µm; andere Dicken im Bereich von 10 µm bis 100 µm oder auch außerhalb dieses Bereichs liegende Dicken sind ebenfalls denkbar. Die Adhäsionsschichten 12 sind gasblasenfrei und bestehen im Ausführungsbeispiel aus Acrylatkleber, dem ein Absorber-Farbstoff beigemischt ist, bei einer Dicke von 23 µm, wobei bevorzugte Schichtdicken zwischen 1 µm und 40 µm liegen. Im Ausführungsbeispiel enthält der Datenspeicher 1 zwanzig Lagen 10 der Polymerfolie 11 und hat einen Außendurchmesser von etwa 30 mm. Seine Höhe beträgt 19 mm. Eine andere Anzahl von Lagen 10 oder andere Abmessungen sind ebenfalls möglich. Die Anzahl der Wicklungen oder Lagen 10 kann zum Beispiel zwischen zehn und dreißig liegen, aber auch größer als dreißig sein.

Die in einer Aussparung im Zentralbereich des Datenspeichers 1 angeordnete Schreib- und Leseeinrichtung 2 enthält einen Schreibund Lesekopf 20, der mit Hilfe einer Mechanik 21 in den Richtungen der eingezeichneten Pfeile gedreht und axial hin- und herbewegt werden kann. Der Schreib- und Lesekopf 20 weist optische Elemente auf, mit deren Hilfe ein von einem in Figur 1 nicht dargestellten Laser erzeugter Lichtstrahl (zum Beispiel der Wellenlänge 630 nm oder 532 nm) auf die einzelnen Lagen 10 der Polymerfolie 11 fokussiert werden kann. Da der Schreib- und Lesekopf 20 mit Hilfe der Mechanik 21 bewegt wird, kann er alle Lagen 10 des Datenspeichers 1 vollständig abtasten. Im Ausführungsbeispiel ruht dabei der Datenspeicher 1. Er braucht also nicht im Hinblick auf eine hohe Rotationsgeschwindigkeit ausgewuchtet zu sein (und muß auch nicht abgewickelt bzw. umgespult werden), im Gegensatz zu dem Schreib- und Lesekopf 20. Der Übersichtlichkeit halber sind in Figur 1 die zum Auswuchten des Schreib- und Lesekopfs 20 vorgesehenen Elemente nicht gezeigt. Der erwähnte Laser befindet sich außerhalb des Schreib- und Lesekopfes 20 und ist stationär; der Laserstrahl wird über optische Elemente in den Schreib- und Lesekopf 20 gelenkt.

Zum Speichern oder Einschreiben von Information in den Datenspeicher 1 wird der Laser im Ausführungsbeispiel mit einer Strahlleistung von etwa 1 mW betrieben. Der Laserstrahl dient dabei als Schreibstrahl und wird auf eine vorgewählte Lage 10 der Polymerfolie 11 fokussiert, so daß der Strahlfleck kleiner als 1 µm ist, wobei die Lichtenergie in Form kurzer Pulse von etwa 10 µs Dauer eingebracht wird. Die Energie des Schreibstrahls wird in dem Strahlfleck absorbiert, begünstigt durch den Absorber in der benachbarten Adhäsionsschicht 12, was zu einer lokalen Erwärmung der Polymerfolie 11 und damit zu einer lokalen Änderung der Brechzahl und der Reflektivität führt.

Um gespeicherte Information aus dem Datenspeicher 1 auszulesen, wird der Laser im Continuous-Wave-Modus (CW-Modus) betrieben. In Abhängigkeit von der gespeicherten Information wird der auf die gewünschte Stelle fokussierte Lesestrahl reflektiert, und die Intensität des reflektierten Strahls wird von einem Detektor in der Schreib- und Leseeinrichtung 2 erfaßt.

Der Datenspeicher kann auch von einer Ausführungsform sein, die vom Benutzer nicht beschreibbar ist. In diesem Fall enthält er vom Hersteller eingeschriebene Informationseinheiten. Eine Schreibfunktion im Datenlaufwerk des Benutzers erübrigt sich dann.

In der Polymerfolie 11 sind die Informationseinheiten durch Änderung der optischen Eigenschaften in einem Bereich mit einer bevorzugten Größe von weniger als 1 µm ausgebildet. Dabei kann die Information binär gespeichert sein, d.h. die lokale Reflektivität nimmt an der Stelle einer Informationseinheit nur zwei Werte an. Das heißt, wenn die Reflektivität oberhalb eines festgelegten Schwellenwerts liegt, ist an der betrachteten Stelle des Informationsträgers z.B. eine "1" gespeichert, und wenn sie unterhalb dieses Schwellenwerts oder unterhalb eines anderen, niedrigeren Schwellenwerts liegt, entsprechend eine "0". Es ist aber auch denkbar, die Information in mehreren Graustufen abzuspeichern. Dies ist möglich, wenn sich die Reflektivität der Polymerfolie an der Stelle einer Informationseinheit durch definiertes Einstellen der Brechzahl auf gezielte Weise verändern läßt, ohne daß dabei eine Sättigung erreicht wird.

Figur 2 veranschaulicht einen Verfahrensschritt bei der Herstellung des Datenspeichers 1. Ausgangsmaterial ist eine Polymerfolie aus biaxial orientiertem Polypropylen, die hier mit 30 bezeichnet ist. Die Polymerfolie 30 ist auf einer Seite mit einer Adhäsionsschicht 32 aus Acrylatkleber versehen. Um die spiralartige Struktur des Informationsträgers zu erstellen, wird die Polymerfolie 30 an einem zylindrischen Wickelkörper 34 angelegt, der in Figur 2 im Querschnitt zu sehen ist. Dabei weist die Adhäsionsschicht 32 nach außen. Anschließend wird der Wickelkörper 34 solange gedreht, bis die Polymerfolie 30 mit der Adhäsionsschicht 32 vollständig aufgewickelt ist. Dabei entstehen die in Figur 1 mit 10 bezeichneten Lagen der Polymerfolie 30, wobei die Adhäsionsschicht 32 die jeweiligen zwischen benachbarten Polymerfolienlagen 10 vorgesehenen Adhäsionsschichten 12 bildet. Abschließend wird der Wickelkörper 34 in axialer Richtung herausgezogen. Da die Adhäsionsschicht 32 beim Wickeln nach außen weist, befindet sich zwischen der Oberfläche des Wickelkörpers 34 und der innersten Wicklung der Polymerfolie 30 kein Adhäsionsmittel, was das Herausziehen des Wickelkörpers 34 erschweren würde.

Figur 3 zeigt den Zentralbereich des Datenspeichers 1 in schematischer Querschnittsansicht. Dargestellt sind die beiden inneren Wicklungen der Polymerfolie 30 mit der Adhäsionsschicht 32. Zur besseren Veranschaulichung sind die Dicken der Polymerfolie 30 und der Adhäsionsschicht 32 im Vergleich zum Durchmesser der inneren Wicklungen übertrieben groß eingezeichnet, was analog auch für Figur 2 gilt. Nach dem Herausziehen des Wickelkörpers 34 ist im Zentralbereich des Datenspeichers 1 eine Aussparung 36 ausgebildet, deren periphere Begrenzung 37 durch die innerste Wicklung 38 der Polymerfolie 30 gebildet ist. Bei der Verwendung des Datenspeichers 1, so, wie sie anhand von Figur 1 erläutert ist, stört also kein Wickelkern, der von einem von der Schreibund Leseeinrichtung 2 emittierten Schreibstrahl einmal und von einem von der Schreib- und Leseeinrichtung 2 emittierten und nach Reflexion empfangenen Lesestrahl sogar zweimal durchdrungen werden müßte. Ferner befindet sich an der peripheren Begrenzung 37 kein Adhäsionsmaterial, das zum Beispiel zur Verschmutzung neigen könnte.

Nachdem die Polymerfolie 30 vollständig aufgewickelt ist, kann die Adhäsionsschicht 32 auf der Außenseite der äußersten Windung, sofern erforderlich, abgedeckt oder entfernt werden. Es ist auch denkbar, den fertigen Wickelkörper in eine Hülse einzusetzen, um eine bessere Stabilität zu erreichen.

Die in Figur 3 gezeigte Form der inneren Wicklungen der Polymerfolie 30 ergibt sich beim Aufwickeln auf den zylindrischen Wickelkörper 34 (siehe Figur 2). Daß diese Form nicht dem Verlauf einer idealen Spirale entspricht, liegt daran, weil die Polymerfolie 30 am Beginn der zweiten Wicklung mehr oder weniger abrupt radial nach außen ausweichen muß, wenn sie sich an das freie Ende 39 der Polymerfolie 30 anlegt. Diese Deformation setzt sich nach außen fort, betrifft aber besonders die inneren Wicklungen.

Bessere Ergebnisse werden mit einem Wickelkörper 40 erzielt, wie er in Figur 4 dargestellt ist. Der Wickelkörper 40 hat eine im Querschnitt spiralartige Außenkontur 42 mit einer Stufe 44, deren radialer Sprung der Dicke der Polymerfolie 30 plus der Dicke der Adhäsionsschicht 32 entspricht. Wie Figur 4 verdeutlicht, führt die spiralartige Außenkontur 42 beim Wickelvorgang den Anfangsbereich der zweiten Wicklung der Polymerfolie 30 störungsfrei über den Bereich am freien Ende 39 der Polymerfolie 30, das an der Stufe 44 anliegt, hinweg. Ansonsten läuft das anhand von Figur 4 veranschaulichte Verfahren zum Herstellen eines Datenspeichers 1 genauso ab wie das in Zusammenhang mit der Figur 2 erläuterte. Wie zuvor, ist auch die Darstellung gemäß Figur 4 nicht maßstäblich. Nach dem Herausziehen des Wickelkörpers 40 verlaufen die Wicklungen der Polymerfolie 30 weitgehend wie bei einer idealen Spirale.

## Patentansprüche

1. Datenspeicher, mit einem optischen Informationsträger, der eine spiralartig gewickelte Polymerfolie (11, 30) aufweist, wobei der Zentralbereich des Datenspeichers (1) mit einer Aussparung (36) versehen ist, **dadurch gekennzeichnet, daß** die periphere Begrenzung (37) der Aussparung (36) durch die innerste Wicklung (38) der Polymerfolie (30) gebildet ist.

2. Datenspeicher nach Anspruch 1, **dadurch gekennzeichnet, daß** die Polymerfolie (11) in mehreren Polymerfolienlagen (10) gewickelt ist, durch die hindurch Information aus einer vorgewählten Polymerfolienlage (10) auslesbar und optional in eine vorgewählte Polymerfolienlage (10) schreibbar ist.

3. Datenspeicher nach Anspruch 2, **dadurch gekennzeichnet, daß** zwischen benachbarten Polymerfolienlagen (10) jeweils eine Adhäsionsschicht (12) angeordnet ist.

4. Datenspeicher nach Anspruch 3, **dadurch gekennzeichnet, daß** die Brechzahl der Adhäsionsschicht (12) nur geringfügig von der Brechzahl der Polymerfolie (11) abweicht.

5. Datenspeicher nach einem der Ansprüche 1 bis 4, **dadurch gekennzeichnet, daß** die Brechzahl der Polymerfolie (11) lokal durch Erwärmung veränderbar ist.

6. Datenspeicher nach Anspruch 5, **dadurch gekennzeichnet, daß** der Polymerfolie (11) ein Absorber zugeordnet ist, der dazu eingerichtet ist, einen Schreibstrahl zumindest teilweise zu absorbieren und die dabei erzeugte Wärme zumindest teilweise lokal an die Polymerfolie (11) abzugeben.

7. Verfahren zum Herstellen eines Datenspeichers nach Anspruch 1, **dadurch gekennzeichnet, daß** die Polymerfolie (30) spiralartig auf einen Wickelkörper (34; 40) gewickelt wird und der Wickelkörper (34; 40) anschließend aus dem Zentralbereich des Datenspeichers (1) herausgezogen wird.

8. Verfahren nach Anspruch 7 zum Herstellen eines Datenspeichers nach Anspruch 3, wobei die Polymerfolie (30) auf einer Seite mit einer Adhäsionsschicht (32) versehen ist, die beim Wickeln der Polymerfolie (30) auf dem Wickelkörper (34; 40) nach außen weist.

## Claims

1. A data storage medium having an optical information carrier which comprises a spiral-wound polymer film (11, 30), the central area of the data storage medium (1) being provided with a recess (36), **characterized in that** the periphery (37) of the recess (36) is formed by the innermost winding (38) of the polymer film (30).

2. The data storage medium as claimed in claim 1, **characterized in that** the polymer film (11) is wound in a plurality of polymer film plies (10) through which information can be read from a preselected polymer film ply (10) and, optionally, written to a preselected polymer film ply (10).

3. The data storage medium as claimed in claim 2, **characterized in that** there is an adhesion layer (12) between each pair of adjacent polymer film plies (10).

4. The data storage medium as claimed in claim 3, **characterized in that** the refractive index of the adhesion layer (12) differs only slightly from the refractive index of the polymer film (11).

5. The data storage medium as claimed in any of claims 1 to 4, **characterized in that** the refractive index of the polymer film (11) can be changed locally by heating.

6. The data storage medium as claimed in claim 5, **characterized in that** an absorber is assigned to the polymer film (11), which absorber is set up to, at least partly, absorb a write beam and to transfer the generated heat, at least partly, locally, to the polymer film (11).

7. A process for producing a data storage medium as claimed in claim 1, **characterized in that** the polymer film (30) is wound spirally onto a winding body (34; 40) and the winding body (34; 40) is subsequently withdrawn from the central area of the data storage medium (1).

8. The process as claimed in claim 7 for producing a data storage medium as claimed in claim 3, the polymer film (30) being provided on one side with an adhesion layer (32) which faces outward when the polymer film (30) is wound on the winding body (34; 40).

## Revendications

1. Mémoire de données avec un support d'informations optique qui présente un film polymère (11, 30) enroulé en spirale, la partie centrale de la mémoire de données (1) étant pourvue d'un évidement (36), **caractérisée en ce que** la limite périphérique (37) de l'évidement (36) est formée par le premier enroulement intérieur (38) du film polymère (30).

2. Mémoire de données selon la revendication 1, **caractérisée en ce que** le film polymère (11) est enroulé en plusieurs couches (10) de film polymère, à travers lesquelles de l'information peut être extraite d'une couche (10) en film polymère sélectionnée au au préalable et de manière facultative, écrite dans une couche (10) de film polymère sélectionnée au au préalable.

3. Mémoire de données selon la revendication 2, **caractérisée en ce qu'**une couche adhésive (12) est respectivement disposée entre des couches (10) de film polymère voisines.

4. Mémoire de données selon la revendication 3, **caractérisée en ce que** l'indice de réfraction de la couche adhésive (12) ne diffère que faiblement de l'indice de réfraction du film polymère (11).

5. Mémoire de données selon l'une des revendications 1 à 4, **caractérisée en ce que** l'indice de réfraction du film polymère (11) peut être modifié localement par réchauffement.

6. Mémoire de données selon la revendication 5, **caractérisée en ce qu'**est adjoint au film polymère (11 ) un absorbeur préparé pour absorber au moins partiellement un faisceau traceur et transmettre localement et du moins partiellement au film polymère (11) la chaleur alors émise.

7. Procédé de fabrication d'une mémoire de données selon la revendication 1, **caractérisé en ce que** le film polymère (30) est enroulé en spirale sur une bobine (34 ; 40) et **en ce que** la bobine (34 ; 40) est ensuite tirée et sortie de la partie centrale de la mémoire de données (1 ).

8. Procédé selon la revendication 7 pour fabriquer une mémoire de données selon la revendication 3, le film polymère (30) étant sur une face pourvu d'une couche adhésive (32) qui est tournée vers l'extérieur lors de l'enroulement du film polymère (30) sur la bobine (34 ; 40).
